# EUROPEAN PATENT SPECIFICATION

(11) **EP 3 691 235 B1**
(45) Date of publication and mention of the grant of the patent: **03.09.2025**
(21) Application number: 18861549.6
(22) Date of filing: 15.08.2018
(51) Int. Cl.: H04M 1/724, G06F 3/04817, G06F 3/0482, G06F 3/0488, G09G 5/14, G09G 5/38, H04M 1/72469, G06F 3/14

(54) **DISPLAY METHOD AND MOBILE TERMINAL**
ANZEIGEVERFAHREN UND MOBILES ENDGERÄT
PROCÉDÉ D'AFFICHAGE ET TERMINAL MOBILE

(30) Priority: 30.09.2017 CN 201710915473
(43) Date of publication of application: 05.08.2020
(73) Proprietor: Vivo Mobile Communication Co., Ltd., Dongguan, Guangdong 523860 (CN)
(72) Inventor: ZHA, Jiehong, Dongguan Guangdong 523860 (CN)
(74) Representative: Winter, Brandl - Partnerschaft mbB
(86) International application number: PCT/CN2018/100635
(87) International publication number: WO 2019/062364

(56) References cited:
- EP-A1- 2 849 042
- EP-A2- 1 826 995
- WO-A1-2016/106781
- CN-A- 103 500 079
- CN-A- 104 516 647
- CN-A- 105 912 285
- CN-A- 106 843 629
- CN-A- 107 580 143
- US-A1- 2011 004 845

## Description

### TECHNICAL FIELD

The present disclosure relates to the field of communication technologies, and in particular, to a display method and a mobile terminal.

### BACKGROUND

With the development of communication technology, mobile terminals such as mobile phones and tablet computers have become more and more popular, and people have more and more functional requirements for mobile terminals. Mobile terminals not only have basic call and short message sending and receiving functions, but also have audio/video playback, games and office functions, which have become an indispensable part of people's daily lives.

When the mobile terminal is running an application program on the foreground, if a communication event such as an incoming call request or an audio/video call request is received, the mobile terminal may display the application program and the content associated with the communication event in a split-screen display manner. However, when the mobile terminal runs an application program on the foreground, the user does not need to process each communication event in real time, but the mobile terminal directly displays the received communication event in a split-screen display. As a result, the mobile terminal cannot display the associated content of communication events according to the user's needs. It can be seen that when a current mobile terminal receives a communication event during the running of an application program, the related content of the communication event cannot be displayed according to the needs of the user.

Document US 2011/0004845 A1 discusses a method and system for notifying a user of an event or information using motion and transparency on a small screen display. When an in-application event occurs or an indication that a new event has occurred, a notification window is created off display, and graphically animated on top of the current application display, in a small window which is un-obtrusive to user interaction in the active application. Document EP 2 849 042 A1 discusses a method, an apparatus, and an electronic device for displaying notice information. The method comprises receiving the notice information sent from the application program and displaying the notice information in a predetermined area. Further related prior art is disclosed in EP 1 826 995 A2.

### SUMMARY

The invention is set out in the appended set of claims.

A display method applied to a mobile terminal is provided in an embodiment of the present disclosure, including:
acquiring, in the case that a communication event is received, associated information of the communication event, during a process of running an application program on a foreground of the mobile terminal;
determining a target display position corresponding to the communication event, based on the associated information of the communication event;
displaying a prompt icon corresponding to the communication event at the target display position in a display interface of the application program; and
continuing to run the application program on the foreground and displaying a content associated with the communication event, in the case that a content display operation input for the prompt icon is received.

A mobile terminal is further provided in an embodiment of the present disclosure, including:
an information acquiring module, configured to acquire, in the case that a communication event is received, associated information of the communication event, during a process of running an application program on a foreground of the mobile terminal;
a display position determining module, configured to determine a target display position corresponding to the communication event, based on the associated information of the communication event;
a prompting module, configured to display a prompt icon corresponding to the communication event at the target display position in a display interface of the application program; and
a display module, configured to continue to run the application program on the foreground and display a content associated with the communication event, in the case that a content display operation input for the prompt icon is received.

A mobile terminal is further provided in an embodiment of the present disclosure, including a processor, a memory and a computer program stored in the memory and operable on the processor, where the computer program is executed by the processor to perform the display method hereinabove.

A computer-readable storage medium storing a computer program is further provided in an embodiment of the present disclosure, where the computer program is executed by a processor to perform the display method hereinabove.

### BRIEF DESCRIPTION OF THE DRAWINGS

In order to illustrate the technical solution of the embodiments of the present disclosure more clearly, the drawings used in the description of the embodiments of the present disclosure will be briefly described below. Obviously, the drawings in the following description are just some embodiments of the present disclosure. For those of ordinary skill in the art, other drawings can be obtained based on these drawings without paying creative labor.
FIG.1 is a flowchart of a display method in an embodiment of the present disclosure;
FIG.2a is a schematic view of a display interface of a mobile terminal in an embodiment of the present disclosure;
FIG.2b is another schematic view of a display interface of a mobile terminal in an embodiment of the present disclosure;
FIG.2c is another schematic view of a display interface of a mobile terminal in an embodiment of the present disclosure;
FIG.3 is another flowchart of a display method in an embodiment of the present disclosure;
FIG.4a is another schematic view of a display interface of a mobile terminal in an embodiment of the present disclosure;
FIG.4b is another schematic view of a display interface of a mobile terminal in an embodiment of the present disclosure;
FIG.5a is another schematic view of a display interface of a mobile terminal in an embodiment of the present disclosure;
FIG.5b is another schematic view of a display interface of a mobile terminal in an embodiment of the present disclosure;
FIG.6a is a schematic view of a landscape screen display state of a mobile terminal in an embodiment of the present disclosure;
FIG.6b is another schematic view of a landscape screen display state of a mobile terminal in an embodiment of the present disclosure;
FIG.7 is a schematic view of a mobile terminal in an embodiment of the present disclosure;
FIG.8 is a schematic view of an information acquisition module in a mobile terminal in an embodiment of the present disclosure;
FIG.9 is another schematic view of a mobile terminal in an embodiment of the present disclosure;
FIG. 10 is a schematic view of a display module in a mobile terminal in an embodiment of the present disclosure;
FIG.11 is another schematic view of a mobile terminal in an embodiment of the present disclosure;
FIG.12 is a schematic view of a processing module in a mobile terminal in an embodiment of the present disclosure;
FIG.13 is another schematic view of a processing module in a mobile terminal in an embodiment of the present disclosure; and
FIG.14 is a schematic view of a hardware structure of a mobile terminal in an embodiment of the present disclosure.

### DETAILED DESCRIPTION

In the following, the technical solutions in the embodiments of the present disclosure will be clearly and completely described with reference to the drawings in the embodiments of the present disclosure. Obviously, the described embodiments are part of the present disclosure, but not all of them. Based on the embodiments of the present disclosure, all other embodiments obtained by a person of ordinary skill in the art without creative work shall fall within the scope of the present disclosure.

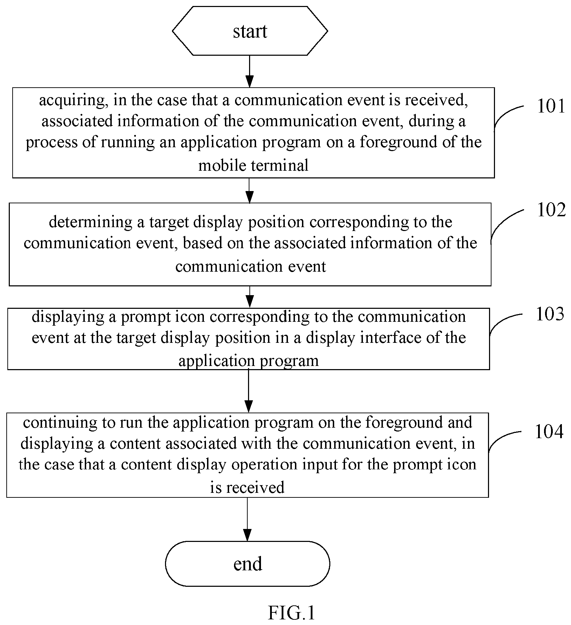

FIG.1 is a schematic flowchart of a display method applied to a mobile terminal in an embodiment of the present disclosure. As shown in FIG.1, the above method includes the following steps:
Step 101: acquiring, in the case that a communication event is received, associated information of the communication event, during a process of running an application program on a foreground of the mobile terminal.

In the embodiment of the present disclosure, during the process of running the application program on the foreground of the mobile terminal, if the mobile terminal receives a communication event, it may acquire the associated information of the communication event. The application program running on the foreground of the mobile terminal refers to that the interface of the application program occupies the display screen of the mobile terminal.

The communication event may include one or more events to be processed, for example, at least one of an incoming call request, an audio/video call request, a push message and a short message.

In addition, the associated information of the communication event may include at least one of a type, a number, a preset priority of the events to be processed in the communication event and the like.

For example, taking the associated information of the communication event as the preset priority as an example, if the communication event is an event to be processed, the preset priority of the event to be processed may be used as the associated information of the communication event. If the communication event includes multiple events to be processed, the sum of preset priorities of multiple events to be processed may be used as the associated information of the communication event.

Step 102: determining a target display position corresponding to the communication event, based on the associated information of the communication event.

In the embodiment of the present disclosure, if the associated information of the communication event is obtained in the above step 101, the mobile terminal may determine, according to the preset correspondence between the associated information and the display position, the display position corresponding to the associated information of the communication event as the target display position.

The display position is a pre-designated position in the display area of the mobile terminal. In the correspondence between the preset associated information and the display position, different associated information correspond to different display positions, that is, the associated information are in a one-to-one correspondence to the display positions, so that when the mobile terminal displays a prompt icon at a certain display position, the user may know the associated information of the communication event according to the display position so as to determine whether the received communication event is dealt with in real time.

For example, taking the associated information of the communication event as the preset priority of the event as an example, if the preset priority of the incoming call request is 6, the preset priority of the short message is 3, and the preset priority of the push message is 2, and the preset correspondence relationship in the mobile terminal is that the preset priority 9 corresponding to the display position A, the preset priority 6 to the display position B, and the preset priority 3 to the display position C. If the communication event includes an incoming call request and a short message, the associated information of the communication event is the preset priority 9, and the target display position is determined to be the display position A. If the above communication event is only an incoming call request, the associated information of the communication event is the preset priority 6, and the target display is determined to be the display position B.

Step 103: displaying a prompt icon corresponding to the communication event at the target display position in a display interface of the application program.

In the embodiment of the present disclosure, if the target display position is determined in step 103, the mobile terminal may display a prompt icon at the target display position in the display interface of the application program. The display interface of the application program is a display interface of the application program when the application program is running on the foreground, e.g., a video play interface of a video application program. In this way, when the mobile terminal displays the prompt icon, the user may know the associated information of the communication event and the event to be processed according to the display position of the prompt icon, so as to determine whether to deal with the communication event in real time.

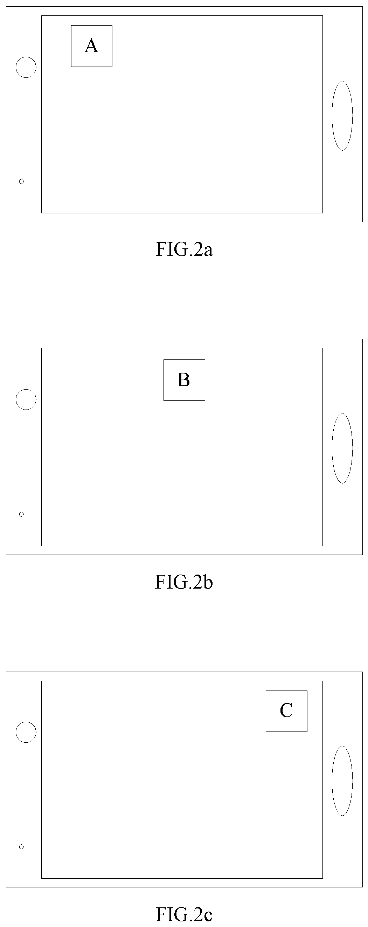

For example, as shown in FIG.2, taking the associated information of the communication event as the preset priority of the event as an example, if the communication event includes an incoming call request and a short message, a prompt icon is displayed at the display position A shown in FIG.2a. If the above communication event is only an incoming call request, the prompt icon is displayed at the display position B shown in FIG.2b. If the above communication event is only a short message, the prompt icon is displayed at the display position C shown in FIG.2c, then the user may determine the events to be processed in the communication events according to the display positions.

Step 104: continuing to run the application program on the foreground and displaying a content associated with the communication event, in the case that a content display operation input for the prompt icon is received.

In the embodiment of the present disclosure, if a prompt icon is displayed in the above step 103, the user may determine whether to process the communication event in real time according to the display position of the prompt icon. If the user determines that the received communication event needs to be dealt with in real time, the user may input the content display operation for the prompt icon. When the user receives the content display operation, the terminal continues to run the application program on the foreground and displays the content associated with the communication event.

The content display operation may be a preset double-click operation on a display screen of the mobile terminal, or a preset sliding operation, etc., and when the mobile terminal receives the content display operation, it may instruct to continue running the application program on the foreground and display the content associated with the communication event.

In addition, the continuing to run the application program on the foreground and displaying the content associated with the communication event, may refer to that, the mobile terminal displays the application program in the first area, and displays the content associated with the communication event in the second area; or the mobile terminal may display the application program in full screen, and display content associated with communication events in the form of a floating window in the display interface of the application program.

The content associated with the communication event may include an operation option for the user to process the communication event, or the content of the communication event, such as the content of a short message and the like, which is not described herein.

In the embodiment of the present disclosure, the mobile terminal may be a mobile phone, a tablet personal computer, a laptop computer, a personal digital assistant (PDA), or a mobile Internet device (MID), or a wearable device.

According to the display method of the embodiment of the present disclosure, during the process of running an application program on the foreground of the mobile terminal, if a communication event is received, the associated information of the communication event is acquired; and based on the associated information of the communication event, the target display position corresponding to the communication event is determined; the prompt icon corresponding to the communication event is displayed at the target display position in the display interface of the application program; if a content display operation input for the prompt icon is received, the application program is continued to run on the foreground and the content associated with the communication event is displayed. When a mobile terminal receives a communication event, it may display a prompt icon at a display position corresponding to the communication event, so that the user may determine whether to deal with the communication event in real time according to the display position. Only when the user inputs the content display operation for the prompt icon, the content associated with the communication event is displayed, so that the content associated with the communication event may be displayed according to the needs of the user.

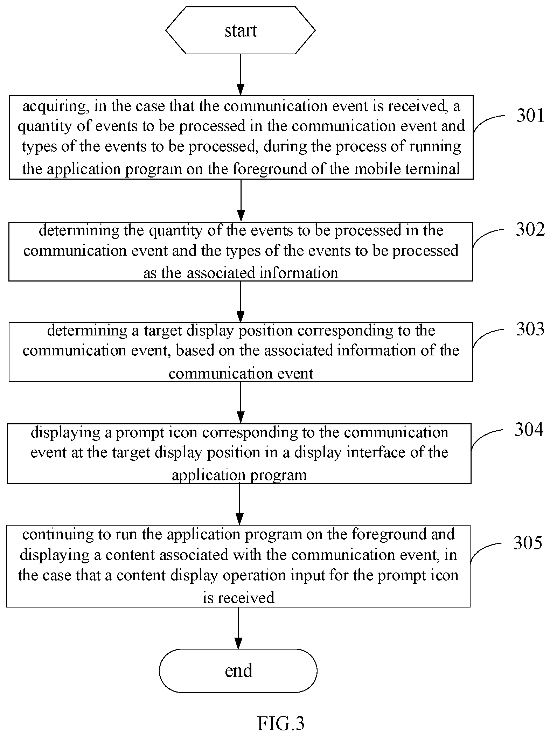

FIG.3 is a schematic flowchart of a display method in an embodiment of the present disclosure. As shown in FIG.3, the method includes the following steps:
Step 301: acquiring, in the case that the communication event is received, a quantity of events to be processed in the communication event and types of the events to be processed, during the process of running the application program on the foreground of the mobile terminal.

In the embodiment of the present disclosure, during the process of running the application program on the foreground of the mobile terminal, if the mobile terminal receives a communication event, the mobile terminal may acquire a quantity of events to be processed in the communication event and types of the events to be processed. The application program running on the foreground of the mobile terminal refers to that the interface of the application program occupies the display screen of the mobile terminal.

The quantity of events to be processed in the communication event and the types of the events acquired by the mobile terminal may be determined by acquiring the information carried when the network side sends the communication event to the mobile terminal. For example, if the mobile terminal receives both audio/video call requests and push message at the same time, the mobile terminal may determine that it has received two events to be processed including an audio/video call and a push message according to the dialing properties of the events to be processed sent by the network side. If the mobile terminal receives one audio/video call request and two push messages at the same time, the mobile terminal may determine that it has received 3 events to be processed including the audio/video call and push messages according to the dialing properties of the events to be processed sent by the network side.

Step 302: determining the quantity of the events to be processed in the communication event and the types of the events to be processed as the associated information.

In the embodiment of the present disclosure, if the quantity of events to be processed in the communication event and the types of the event are acquired in the above step 301, the mobile terminal may determine the quantity of events to be processed and the type of the events as the above-mentioned associated information.

Step 303: determining a target display position corresponding to the communication event, based on the associated information of the communication event.

In the embodiment of the present disclosure, if the associated information of the communication event is determined in the above step 302, the mobile terminal may determine, according to the preset correspondence between the associated information and the display position, the display position corresponding to the associated information of the communication event as the target display.

For example, if the mobile terminal presets a communication event as one event to be processed, and the communication event of the incoming call request is corresponding to display position D1, the communication event of the short message is corresponding to the display position D2. The communication events are two events to be processed, the communication event of the incoming call request and short message is corresponding to display position E1, and the communication event of the short message and push message is corresponding to display position E2. When the associated information of the communication event is 2 events to be processed and the types of the event to be processed include an incoming call request and a short message, the mobile terminal determines the display position E1 as the target display position.

Step 304: displaying a prompt icon corresponding to the communication event at the target display position in a display interface of the application program.

In the embodiment of the present disclosure, if the target display position is determined in the above step 303, the mobile terminal may display a prompt icon at the target display position, so that the user may accurately determine the quantity of events to be processed in the communication event and types of the events through the display position of the prompt icon, thereby determining more quickly and accurately whether the communication events need to be dealt with in real time.

Step 305: continuing to run the application program on the foreground and displaying content associated with the communication event, in the case that a content display operation input for the prompt icon is received.

In the embodiment of the present disclosure, if a prompt icon is displayed in the above step 304, when the user determines that the received communication event needs to be processed in real time, a content display operation for the prompt icon may be input, and when the mobile terminal receives the content display operation, then the mobile terminal may continue to run the application program on the foreground and display the content associated with the communication event.

The content display operation may be any operation that instructs the mobile terminal to continue running the application program on the foreground and display the content associated with the communication event, for example, it may be a preset double-click operation or a preset slide operation and so on.

Optionally, before step 305, the method may further include: receiving a touch operation input by a user; determining whether the touch operation is the content display operation input for the prompt icon; in the case that the touch operation is the content display operation input for the prompt icon, determining that the content display operation input for the prompt icon is received.

In this embodiment, when the mobile terminal displays a prompt icon at the target display position, if a touch operation input by the user is received, it is determined whether the touch operation is a content display operation input for the prompt icon, and when the result is yes, the touch operation input by the user is taken as a content display operation, thereby avoiding the user's misoperation and displaying the associated content of the communication event, and improving the accuracy of displaying the associated content of the communication event according to the user's needs.

As mentioned above, the display position of the prompt icon varies with the communication events. Similarly, for the prompt icons at different display positions, the corresponding content display operations are different. For example, a double-click touch operation is set as the content display operation for the prompt icon displayed at the D1 position, and a single-click touch operation is set as the content display operation for the prompt icon displayed at the D2 position.

Optionally, the above step 305 may further include: in the case that the content display operation input for the prompt icon is received, determining a display position corresponding to the content display operation according to a preset correspondence between a user-input operation and a display position; and continuing to run the application program on the foreground and displaying the content associated with the communication event at the display position corresponding to the content display operation.

In this embodiment, when receiving a content display operation, the mobile terminal may determine a corresponding display position according to the content display operation, and display the content associated with the communication event at the corresponding display position. In this way, the mobile terminal may display the content associated with the communication event in accordance with the user's operation input for the prompt icon and in the display mode required by the user, thereby further meeting the needs of the user and improving the user experience.

For example: if the preset sliding track "L" in the mobile terminal corresponds to the display position of the upper left corner of the mobile terminal, the sliding track "W" corresponds to the display position of the upper right corner of the mobile terminal; if the sliding track of the content display operation received by the mobile terminal is "L", the mobile terminal displays the content associated with the communication event at the upper left corner of its display area.

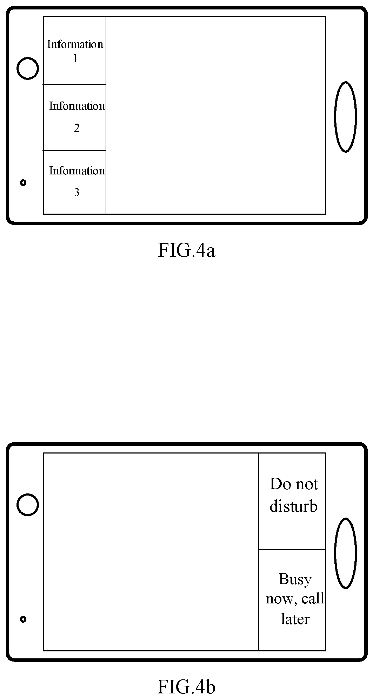

In addition, the displaying the content associated with the communication event may be displaying the content associated with the communication event in a preset area in the mobile terminal, or displaying the content associated with the communication event in the form of a floating window. For example: if the communication event includes short message 1, short message 2, and short message 3, when a content display operation is received, the mobile terminal may display the short message 1, short message 2, and short message 3 as shown in FIG.4a .

Of course, after the above step 305, the mobile terminal may receive the user's input operation for the associated content of the communication event, and will perform corresponding processing on the communication event according to the received operation. For example, if the above mobile terminal displays a display interface as shown in FIG.4a when it receives a content display operation, the mobile terminal may receive a user's click operation for a short message, such as a click operation on short message 1. If a click operation is received, the mobile terminal may display the quick reply information in the fourth area as shown in FIG.4b, such as "Do not disturb" and "Busy now, call later", etc., and the mobile terminal may send the corresponding quick reply message to the opposite side according to the user's selection of the quick reply information.

Optionally, the communication event is an incoming call request or an audio/video call request, and the displaying the content associated with the communication event includes: displaying at least one operation button corresponding to the incoming call request or the audio/video call request; the method further includes: in the case that a click operation on a target operation button is received, or in the case that a preset touch operation associated with the target operation button is received, processing the incoming call request or the audio/video call request corresponding to the target operation button, where the target operation button is one of the at least one operation button.

In this embodiment, when the communication event is an incoming call request or an audio/video call request, the mobile terminal may display at least one operation button corresponding to the communication event, and when the user triggers any operation button, such as a click operation on the operation button, or the user inputs a preset touch operation associated with the operation button, the mobile terminal may timely process the call request or video call corresponding to the operation button, so that the communication event may be processed according to the user's needs, and the operation is convenient and time-saving.

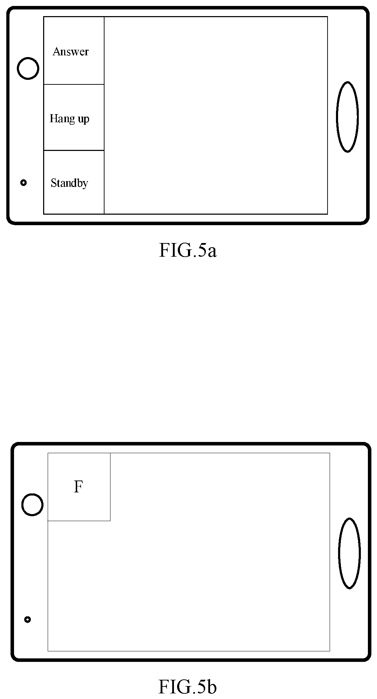

For example, as shown in FIG.5a, if the mobile terminal receives an audio/video call request, when the mobile terminal receives a content display operation, the mobile terminal may display "Answer" button, "Hang up" button, and "Standby" button corresponding to the audio/video call request in a 1/8 area on the left side of its landscape screen, and if the mobile terminal receives a click operation on the "Answer" button, the incoming call request or audio/video call request is answered; if the mobile terminal receives the click operation on the "Hang up" button, the mobile terminal will reject the incoming call request or the audio/video call request; if the mobile terminal receives the click operation on the "Standby" button, the mobile terminal may maintain the call request or the audio/video call request.

If the mobile terminal receives a preset touch operation associated with a target operation, the mobile terminal may process the incoming call request or the audio/video call request in a manner corresponding to the target operation button, which may be understood as, for example, when a sliding operation input by the user is the sliding track "2" and a corresponding relationship between the sliding track "2" and the hang up button is preset in the mobile terminal, the mobile terminal refuses to answer the call request or the audio/video call request, thereby making the operation more convenient and time-saving and further improving the user experience.

Optionally, the target operation button is an answer button, and the step of processing the call request or the audio/video call request corresponding to the target operation button includes: answering the call request or the audio/video call request; continuing to run the application program on the foreground, and displaying the call interface of the call request or the audio/video call request.

In this embodiment, if the mobile terminal receives the click operation on the answer button, the mobile terminal answers the incoming call request or the audio/video call request, and displays the call interface of the incoming call request or the audio/video call request. For example, as shown in FIG.5b, the mobile terminal may display a call interface in a preset area F in the upper left corner of the display area, thereby facilitating the user to view the call interface and improving the user experience.

In addition, if the mobile terminal answers the incoming call request or the audio/video call request, the mobile terminal may only output the call data, then mobile terminal detects whether it is connected to an external sound output device (such as a headset or a stereo), and if the mobile terminal is not connected to the external sound output device, the mobile terminal may control the sound output state of the mobile terminal to a hands-free state, thereby improving the call quality and further reducing interference with the operation of foreground application programs, especially game application programs.

Optionally, the target operation button is an answer button, and the step of processing the call request or the audio/video call request corresponding to the target operation button further includes: detecting whether a display state of the mobile terminal is in a target landscape display state; if the display state of the mobile terminal is not in the target landscape display state, displaying a posture adjustment prompt information to prompt the user to adjust the display state of the mobile terminal to the target landscape screen display state.

In this embodiment, if the mobile terminal answers an incoming call request or an audio/video call request, the mobile terminal detects whether it is in the target landscape display state, and if it is not in the target landscape display state, it may display a posture adjustment prompt information to prompt the user to adjust the display state of the mobile terminal to the target landscape screen display state in time. The target landscape screen display state may be a display state in which a camera (such as a front camera) that is working during a call is not easily blocked, thereby improving the picture quality during the call (especially audio/video calls).

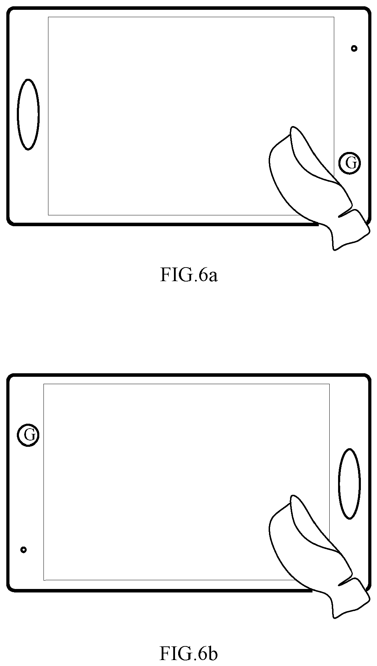

For example, as shown in FIG.6a, if the mobile terminal is in an audio/video call, when the user inputs an operation to the mobile terminal, it is easy to block the camera G at work in the audio/video call. At this time, the mobile terminal may detect its display state. If it is not in the target landscape screen display state, the mobile terminal may display a posture adjustment prompt information to prompt the user to adjust the display state of the mobile terminal to the landscape screen display state shown in FIG.6b. In this landscape screen display state, the camera G is not easily blocked.

In addition, the above mobile terminal detects whether its display state is in the target landscape screen display state, which may be achieved by detecting whether the camera that is working during the audio/video call is blocked.

According to the display method of the embodiment of the present disclosure, during the process of running an application program on the foreground of the mobile terminal, if a communication event is received, the quantity of events to be processed in the communication event and the types of the events are acquired; the number of events to be processed in the communication event and the types of the events are determined as the associated information. In this way, the mobile terminal may display the prompt icon in the corresponding display position according to the quantity of events to be processed in the communication event and the types of the events, so that the user may more accurately determine whether to process in real time the communication event based on the position of the prompt icon, thereby further improving the user experience.

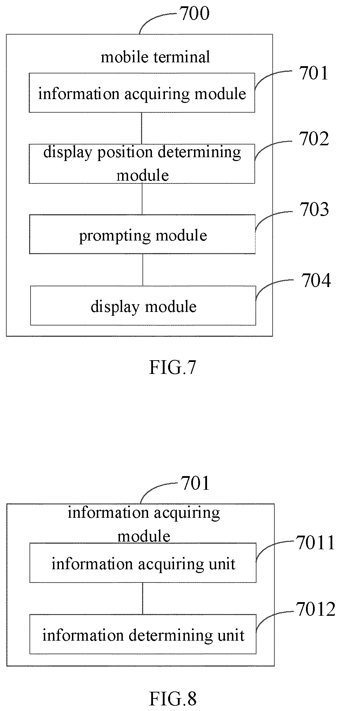

FIG.7 is a schematic view of a mobile terminal in an embodiment of the present disclosure. As shown in FIG.7A, the mobile terminal 700 includes: an information acquiring module 701, a display position determining module 702, a prompting module 703 and a display module 704.

The information acquiring module 701 is configured to acquire, in the case that a communication event is received, associated information of the communication event, during a process of running an application program on a foreground of the mobile terminal.

The display position determining module 702 is configured to determine a target display position corresponding to the communication event, based on the associated information of the communication event.

The prompting module 703 is configured to display a prompt icon corresponding to the communication event at the target display position in a display interface of the application program.

The display module 704 is configured to continue to run the application program on the foreground and display a content associated with the communication event, in the case that a content display operation input for the prompt icon is received.

Optionally, as shown in FIG.8, the information acquiring module 701 includes:
an information acquiring unit 7011, configured to acquire, in the case that the communication event is received, a quantity of events to be processed in the communication event and types of the events to be processed, during the process of running the application program on the foreground of the mobile terminal;
an information determining unit 7012, configured to determine the quantity of the events to be processed in the communication event and the types of the events to be processed as the associated information.

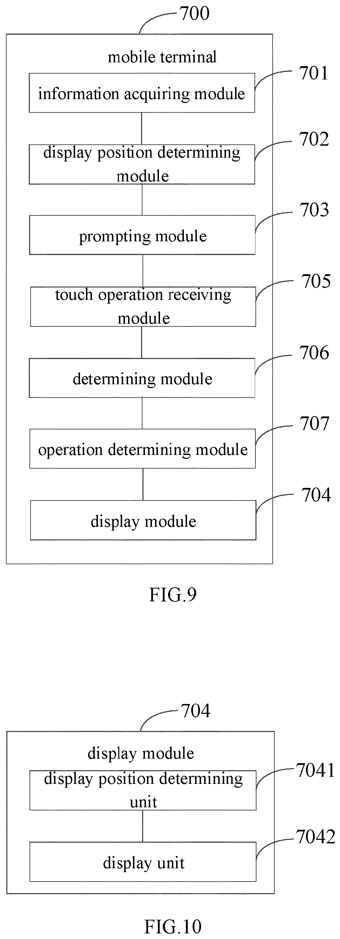

Optionally, as shown in FIG.9, the mobile terminal 700 further includes:
a touch operation receiving module 705, configured to receive a touch operation input by a user;
a determining module 706, configured to determine whether the touch operation is the content display operation input for the prompt icon; and
an operation determining module 707, configured to, in the case that the touch operation is the content display operation input for the prompt icon, determine that the content display operation input for the prompt icon is received.

Optionally, as shown in FIG.10,the display module 704 includes:
a display position determining unit 7041, configured to, in the case that the content display operation input for the prompt icon is received, determine a display position corresponding to the content display operation according to a preset correspondence between a user-input operation and a display position; and
a display unit 7042, configured to continue to run the application program on the foreground and display the content associated with the communication event at the display position corresponding to the content display operation.

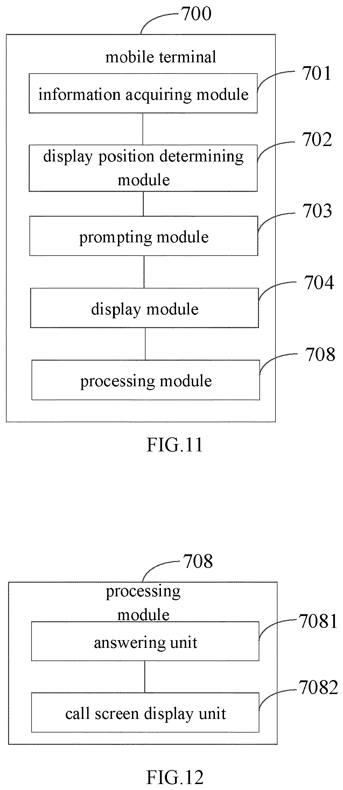

Optionally, as shown in FIG.11,the communication event is an incoming call request or an audio/video call request, and the display module 704 is further configured to display at least one operation button corresponding to the incoming call request or the audio/video call request;
the mobile terminal 700 further includes:
a processing module 708, configured to, in the case that a click operation on a target operation button is received, or in the case that a preset touch operation associated with the target operation button is received, process the incoming call request or the audio/video call request corresponding to the target operation button, where the target operation button is one of the at least one operation button.

Optionally, as shown in FIG.12,the target operation button is an answer button, and the processing module 708 includes:
an answering unit 7081, configured to answer the incoming call request or the audio/video call request;
a call interface display unit 7082, configured to continue to run the application program on the foreground, and display a call interface of the incoming call request or the audio/video call request.

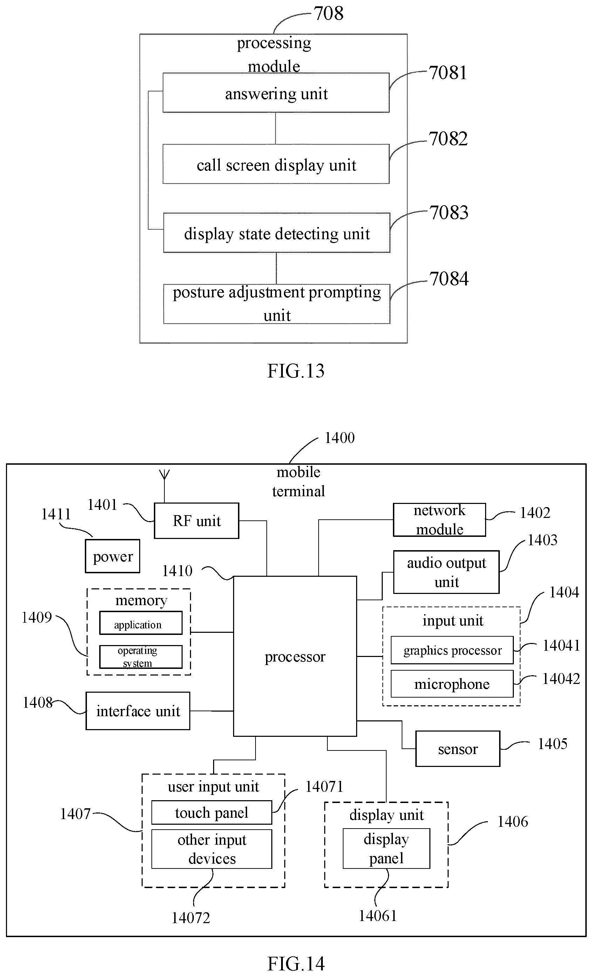

Optionally, as shown in FIG.13,the processing module 708 further includes:
a display state detecting unit 7083, configured to detect whether a display state of the mobile terminal is in a target landscape display state;
a posture adjustment prompting unit 7084, configured to, in the case that the display state of the mobile terminal is not in the target landscape display state, display posture adjustment prompt information to prompt a user to adjust the display state of the mobile terminal to the target landscape display state.

The mobile terminal 700 may implement the processes implemented by the mobile terminal in the foregoing embodiments. To avoid repetition, details thereof are not described herein again.

According to the mobile terminal 700 of the embodiment of the present disclosure, during the process of running an application program on the foreground of the mobile terminal, if a communication event is received, the associated information of the communication event is acquired; and based on the associated information of the communication event, the target display position corresponding to the communication event is determined; the prompt icon corresponding to the communication event is displayed at the target display position in the display interface of the application program; if a content display operation input for the prompt icon is received, the application program is continued to run on the foreground and the content associated with the communication event is displayed. When a mobile terminal receives a communication event, it may display a prompt icon at a display position corresponding to the communication event, so that the user may determine whether to deal with the communication event in real time according to the display position. Only when the user inputs the content display operation for the prompt icon, the content associated with the communication event is displayed, so that the content associated with the communication event may be displayed according to the needs of the user.

FIG.14 is a schematic view of a hardware structure of a mobile terminal in an embodiment of the present disclosure. The mobile terminal 1400 includes, but is not limited to, a radio frequency unit 1401, a network module 1402, an audio output unit 1403, an input unit 1404, a sensor 1405, and a display unit 1406, a user input unit 1407, an interface unit 1408, a memory 1409, a processor 1410, and a power source 1411. Those skilled in the art can understand that the structure of the mobile terminal shown in FIG.14 does not constitute a limitation on the mobile terminal. The mobile terminal may include more or fewer components than shown in the figure, or some components may be combined, or different components. Layout. In the embodiment of the present disclosure, the mobile terminal includes, but is not limited to, a mobile phone, a tablet computer, a notebook computer, a palmtop computer, a car terminal, a wearable device, and a pedometer.

The processor 1410 is configured to: acquire, in the case that a communication event is received, associated information of the communication event, during a process of running an application program on a foreground of the mobile terminal; determine a target display position corresponding to the communication event, based on the associated information of the communication event; display a prompt icon corresponding to the communication event at the target display position in a display interface of the application program; and continue to run the application program on the foreground and display a content associated with the communication event, in the case that a content display operation input for the prompt icon is received.

Optionally, the processor 1410 is configured to: acquire, in the case that the communication event is received, a quantity of events to be processed in the communication event and types of the events to be processed, during the process of running the application program on the foreground of the mobile terminal; determine the quantity of the events to be processed in the communication event and the types of the events to be processed as the associated information.

Optionally, the processor 1410 is configured to: receive a touch operation input by a user; determine whether the touch operation is the content display operation input for the prompt icon; and in the case that the touch operation is the content display operation input for the prompt icon, determine that the content display operation input for the prompt icon is received.

Optionally, the processor 1410 is configured to: in the case that the content display operation input for the prompt icon is received, determine a display position corresponding to the content display operation according to a preset correspondence between a user-input operation and a display position; and run the application program on the foreground and display the content associated with the communication event at the display position corresponding to the content display operation.

Optionally, the communication event is an incoming call request or an audio/video call request, the processor 1410 is configured to: display at least one operation button corresponding to the incoming call request or the audio/video call request; in the case that a click operation on a target operation button is received, or in the case that a preset touch operation associated with the target operation button is received, process the incoming call request or the audio/video call request corresponding to the target operation button, where the target operation button is one of the at least one operation button.

Optionally, the target operation button is an answer button, the processor 1410 is configured to: answer the incoming call request or the audio/video call request; continue to run the application program on the foreground, and display a call interface of the incoming call request or the audio/video call request.

Optionally, the processor 1410 is configured to: detect whether a display state of the mobile terminal is in a target landscape display state; in the case that the display state of the mobile terminal is not in the target landscape display state, display posture adjustment prompt information to prompt a user to adjust the display state of the mobile terminal to the target landscape display state.

The mobile terminal 1400 may implement various processes implemented by the mobile terminal in the foregoing embodiments. To avoid repetition, details thereof are not described herein again.

According to the mobile terminal 1400 of the embodiment of the present disclosure, during the process of running an application program on the foreground of the mobile terminal, if a communication event is received, the associated information of the communication event is acquired; and based on the associated information of the communication event, the target display position corresponding to the communication event is determined; the prompt icon corresponding to the communication event is displayed at the target display position in the display interface of the application program; if a content display operation input for the prompt icon is received, the application program is continued to run on the foreground and the content associated with the communication event is displayed. When a mobile terminal receives a communication event, it may display a prompt icon at a display position corresponding to the communication event, so that the user may determine whether to deal with the communication event in real time according to the display position. Only when the user inputs the content display operation for the prompt icon, the content associated with the communication event is displayed, so that the content associated with the communication event may be displayed according to the needs of the user.

It should be understood that, in the embodiment of the present disclosure, the radio frequency unit 1401 may be used to receive and send signals during the transmission and reception of information or during a call. Specifically, the downlink data from the base station is received and processed by the processor 1410. The uplink data is sent to the base station. Generally, the radio frequency unit 1401 includes, but is not limited to, an antenna, at least one amplifier, a transceiver, a coupler, a low noise amplifier, a duplexer, and the like. In addition, the radio frequency unit 1401 can also communicate with a network and other devices through a wireless communication system.

The mobile terminal provides users with wireless broadband Internet access through the network module 1402, such as helping users to send and receive email, browse web pages, and access streaming media.

The audio output unit 1403 may convert the audio data received by the radio frequency unit 1401 or the network module 1402 or stored in the memory 1409 into an audio signal and output it as a sound. Moreover, the audio output unit 1403 may also provide audio output (for example, call signal reception sound, message reception sound, etc.) related to a specific function performed by the mobile terminal 1400. The audio output unit 1403 includes a speaker, a buzzer, a receiver, and the like.

The input unit 1404 is used to receive audio or video signals. The input unit 1404 may include a graphics processing unit (GPU) 14041 and a microphone 14042. The graphics processor 14041 pairs images of still pictures or videos obtained by an image capture device (such as a camera) in a video capture mode or an image capture mode. Data is processed. The processed image frames may be displayed on a display unit 1406. The image frames processed by the graphics processor 14041 may be stored in the memory 1409 (or other storage medium) or transmitted via the radio frequency unit 1401 or the network module 1402. The microphone 14042 can receive sound, and can process such sound into audio data. The processed audio data can be converted into a format that can be transmitted to a mobile communication base station via the radio frequency unit 1401 in the case of a telephone call mode and output.

The mobile terminal 1400 further includes at least one sensor 1405, such as a light sensor, a motion sensor, and other sensors. Specifically, the light sensor includes an ambient light sensor and a proximity sensor. The ambient light sensor may adjust the brightness of the display panel 14061 according to the brightness of the ambient light. The proximity sensor may close the display panel 14061 and the mobile terminal 1400 when the mobile terminal 1400 moves to the ear. / Or backlight. As a type of motion sensor, the accelerometer sensor can detect the magnitude of acceleration in various directions (generally three axes), and can detect the magnitude and direction of gravity when it is stationary, which can be used to identify mobile terminal attitudes (such as horizontal and vertical screen switching, related games , Magnetometer attitude calibration), vibration recognition related functions (such as pedometer, tap), etc.; sensors 1405 can also include fingerprint sensors, pressure sensors, iris sensors, molecular sensors, gyroscopes, barometers, hygrometers, thermometers, infrared sensors, etc. are not repeated here.

The display unit 1406 is configured to display information input by the user or information provided to the user. The display unit 1406 may include a display panel 14061. The display panel 14061 may be configured in a form of a liquid crystal display (LCD), an organic light-emitting diode (OLED), and the like.

The user input unit 1407 may be used to receive inputted numeric or character information, and generate key signal inputs related to user settings and function control of the mobile terminal. Specifically, the user input unit 1407 includes a touch panel 14071 and other input devices 14072. The touch panel 14071, also known as a touch screen, can collect user's touch operations on or near it (for example, the user uses a finger, a stylus or any suitable object or accessory on the touch panel 14071 or near the touch panel 14071 operating). The touch panel 14071 may include two parts, a touch detection device and a touch controller. The touch detection device detects the user's touch position, and detects the signal caused by the touch operation, and transmits the signal to the touch controller; the touch controller receives touch information from the touch detection device, converts it into contact coordinates, and sends it The processor 1410 receives a command sent by the processor 1410 and executes the command. In addition, the touch panel 14071 may be implemented in various types such as a resistive type, a capacitive type, an infrared type, and a surface acoustic wave. In addition to the touch panel 14071, the user input unit 1407 may further include other input devices 14072. Specifically, other input devices 14072 may include, but are not limited to, a physical keyboard, function keys (such as volume control keys, switch keys, etc.), a trackball, a mouse, and a joystick, and details are not described herein again.

Further, the touch panel 14071 may be overlaid on the display panel 14061. When the touch panel 14071 detects a touch operation on or near the touch panel 14071, it is transmitted to the processor 1410 to determine the type of the touch event, and the processor 1410 then the type of event provides corresponding visual output on the display panel 14061. Although in FIG.14, the touch panel 14071 and the display panel 14061 are implemented as two separate components to implement input and output functions of the mobile terminal, in some embodiments, the touch panel 14071 and the display panel 14061 may be integrated. The implementation of the input and output functions of the mobile terminal is not specifically limited here.

The interface unit 1408 is an interface through which an external device is connected to the mobile terminal 1400. For example, the external device may include a wired or wireless headset port, an external power (or battery charger) port, a wired or wireless data port, a memory card port, a port for connecting a device with an identification module, and audio input/output (I/O) port, video I/O port, headphone port, and more. The interface unit 1408 may be used to receive input (e.g., data information, power, etc.) from an external device and transmit the received input to one or more elements within the mobile terminal 1400 or may be used to connect the mobile terminal 1400 and the external Transfer data between devices.

The memory 1409 can be used to store software programs and various data. The memory 1409 may mainly include a storage program area and a storage data area, where the storage program area may store an operating system, at least one application program required by a function (such as a sound playback function, an image playback function, etc.); the storage data area may store data according to Data (such as audio data, phone book, etc.) created by the use of mobile phones. In addition, the memory 1409 may include a high-speed random access memory, and may also include a non-volatile memory, such as at least one magnetic disk storage device, a flash memory device, or other volatile solid-state storage device.

The processor 1410 is a control center of the mobile terminal, and connects various parts of the entire mobile terminal by using various interfaces and lines, and runs or executes software programs and/or modules stored in the memory 1409, and calls data stored in the memory 1409, perform various functions of the mobile terminal and process data, so as to monitor the mobile terminal as a whole. The processor 1410 may include one or more processing units; preferably, the processor 1410 may integrate an application program processor and a modem processor, wherein the application program processor mainly processes an operating system, a user interface, and an application program, etc. The processor mainly handles wireless communication. It can be understood that the foregoing modem processor may not be integrated into the processor 1410.

The mobile terminal 1400 may further include a power source 1411 (such as a battery) for supplying power to various components. Preferably, the power source 1411 may be logically connected to the processor 1410 through a power management system, so as to manage charging, discharging, and power consumption management through the power management system. And other functions.

In addition, the mobile terminal 1400 includes some functional modules that are not shown, and details are not described herein again.

A mobile terminal is further provided in an embodiment of the present disclosure, including processor 1410, a memory 1409 and a computer program stored in the memory 1409 and operable on the processor 1410, where the computer program is executed by the processor 1410 to perform the display method hereinabove, and the same technical effects can be achieved. To avoid repetition, details are not described herein again.

A computer-readable storage medium storing a computer program is further provided in an embodiment of the present disclosure, where the computer program is executed by a processor to perform the display method, and the same technical effects can be achieved. To avoid repetition, details thereof will not repeat them here. The computer-readable storage medium is, for example, a read-only memory (ROM), a random access memory (RAM), a magnetic disk or an optical disk.

It should be noted that, in this article, the terms "comprise", "comprising" or any other variants thereof are intended to cover non-exclusive inclusion, so that a process, method, article or device including a series of elements includes not only those elements, It also includes other elements not explicitly listed, or elements inherent to such a process, method, article, or device. Without more restrictions, an element limited by the sentence "comprising a ..." does not exclude that there are other identical elements in the process, method, article, or device that includes the element.

Through the description of the above embodiments, those skilled in the art can clearly understand that the methods in the above embodiments can be implemented by means of software plus a necessary universal hardware platform, and of course, also by hardware, but in many cases the former is better. Implementation. Based on such an understanding, the technical solution of the present disclosure, in essence, or a part that contributes to the prior art, can be embodied in the form of a software product, which is stored in a storage medium (such as ROM/RAM, magnetic disk, optical disc) includes several instructions for causing a terminal (which may be a mobile phone, a computer, a server, an air conditioner, or a network device, etc.) to execute the methods described in the embodiments of the present disclosure.

The above are some embodiments of the present disclosure.

## Claims

1. A display method, applied to a mobile terminal, comprising:
acquiring (101), in the case that a communication event is received, associated information of the communication event, during a process of running an application program on a foreground of the mobile terminal;
**characterized in that**, the display method further comprises:
determining (102) a target display position corresponding to the communication event, based on the associated information of the communication event;
displaying (103) a prompt icon corresponding to the communication event at the target display position in a display interface of the application program; and
continuing (104) to run the application program on the foreground and displaying a content associated with the communication event, in the case that a content display operation input for the prompt icon is received;
wherein the acquiring (101), in the case that the communication event is received, the associated information of the communication event, during the process of running the application program on the foreground of the mobile terminal comprises:
acquiring (301), in the case that the communication event is received, the quantity of events to be processed in the communication event and types of the events to be processed, during the process of running the application program on the foreground of the mobile terminal;
determining (302) the quantity of the events to be processed in the communication event and the types of the events to be processed as the associated information.

2. The method according to claim 1, wherein prior to the continuing (104) to run the application program on the foreground and displaying the content associated with the communication event, in the case that the content display operation input for the prompt icon is received, the method further comprises:
receiving a touch operation input by a user;
determining whether the touch operation is the content display operation input for the prompt icon; and
in the case that the touch operation is the content display operation input for the prompt icon, determining that the content display operation input for the prompt icon is received.

3. The method according to claim 1, wherein the continuing (104) to run the application program on the foreground and displaying the content associated with the communication event, in the case that the content display operation input for the prompt icon is received comprises:
in the case that the content display operation input for the prompt icon is received, determining, according to a preset correspondence between a user-input operation and a display position, a display position corresponding to the content display operation; and
continuing to run the application program on the foreground and displaying the content associated with the communication event at the display position corresponding to the content display operation.

4. The method according to claim 1, wherein the communication event is an incoming call request or an audio/video call request, and the displaying the content associated with the communication event comprises:
displaying at least one operation button corresponding to the incoming call request or the audio/video call request;
the method further comprises:
in the case that a click operation on a target operation button is received, or in the case that a preset touch operation associated with the target operation button is received, processing the incoming call request or the audio/video call request corresponding to the target operation button, wherein the target operation button is one of the at least one operation button.

5. The method according to claim 4, wherein the target operation button is an answer button, and the processing the incoming call request or the audio/video call request corresponding to the target operation button comprises:
answering the incoming call request or the audio/video call request;
continuing to run the application program on the foreground, and displaying a call interface of the incoming call request or the audio/video call request.

6. The method according to claim 5, wherein the target operation button is an answer button, and the processing the incoming call request or the audio/video call request corresponding to the target operation button further comprises:
detecting whether a display state of the mobile terminal is in a target landscape display state;
in the case that the display state of the mobile terminal is not in the target landscape display state, displaying posture adjustment prompt information to prompt a user to adjust the display state of the mobile terminal to the target landscape display state.

7. A mobile terminal (700), comprising:
an information acquiring module (701), configured to acquire, in the case that a communication event is received, associated information of the communication event, during a process of running an application program on a foreground of the mobile terminal;
**characterized in that**, the mobile terminal (700) further comprises:
a display position determining module (702), configured to determine a target display position corresponding to the communication event, based on the associated information of the communication event;
a prompting module (703), configured to display a prompt icon corresponding to the communication event at the target display position in a display interface of the application program; and
a display module (704), configured to continue to run the application program on the foreground and display a content associated with the communication event, in the case that a content display operation input for the prompt icon is received;
wherein the information acquiring module (701) comprises:
an information acquiring unit (7011), configured to acquire, in the case that the communication event is received, the quantity of events to be processed in the communication event and types of the events to be processed, during the process of running the application program on the foreground of the mobile terminal;
an information determining unit (7012), configured to determine the quantity of the events to be processed in the communication event and the types of the events to be processed as the associated information.

8. The mobile terminal (700) according to claim 7, further comprising:
a touch operation receiving module (705), configured to receive a touch operation input by a user;
a determining module (706), configured to determine whether the touch operation is the content display operation input for the prompt icon; and
an operation determining module (707), configured to, in the case that the touch operation is the content display operation input for the prompt icon, determine that the content display operation input for the prompt icon is received.

9. The mobile terminal (700) according to claim 7, wherein the display module comprises:
a display position determining unit (702), configured to, in the case that the content display operation input for the prompt icon is received, determine a display position corresponding to the content display operation according to a preset correspondence between a user-input operation and a display position; and
a display unit (704), configured to continue to run the application program on the foreground and display the content associated with the communication event at the display position corresponding to the content display operation.

10. The mobile terminal (700) according to claim 7, wherein the communication event is an incoming call request or an audio/video call request, and the display module (704) is further configured to display at least one operation button corresponding to the incoming call request or the audio/video call request; the mobile terminal further comprises:
a processing module (708), configured to, in the case that a click operation on a target operation button is received, or in the case that a preset touch operation associated with the target operation button is received, process the incoming call request or the audio/video call request corresponding to the target operation button, wherein the target operation button is one of the at least one operation button.

11. The mobile terminal (700) according to claim 10, wherein the target operation button is an answer button, and the processing module (708) comprises:
an answering unit (7081), configured to answer the incoming call request or the audio/video call request;
a call interface display unit, configured to continue to run the application program on the foreground, and display a call interface of the incoming call request or the audio/video call request.

12. The mobile terminal (700) according to claim 11, wherein the processing module further comprises:
a display state detecting unit (7083), configured to detect whether a display state of the mobile terminal is in a target landscape display state;
a posture adjustment prompting unit (7084), configured to, in the case that the display state of the mobile terminal is not in the target landscape display state, display posture adjustment prompt information to prompt a user to adjust the display state of the mobile terminal to the target landscape display state.

13. A computer-readable storage medium storing a computer program, **characterized in that** when the computer program is executed by a processor, the steps of the display method according to any one of claims 1 to 6 are implemented.

## Patentansprüche

1. Anzeigeverfahren, das auf ein mobiles Endgerät angewendet wird und den folgenden Schritt umfasst:
Erfassen (101), in dem Fall, dass ein Kommunikationsereignis empfangen wird, zugehöriger Informationen des Kommunikationsereignisses, während eines Prozesses des Ausführens eines Anwendungsprogramms auf einem Vordergrund des mobilen Endgeräts;
**dadurch gekennzeichnet, dass** das Anzeigeverfahren ferner die folgenden Schritte umfasst:
Bestimmen (102) einer Ziel-Anzeigeposition, die dem Kommunikationsereignis entspricht, basierend auf den zugehörigen Informationen des Kommunikationsereignisses;
Anzeigen (103) eines Aufforderungssymbols, das dem Kommunikationsereignis entspricht, an der Ziel-Anzeigeposition in einer Anzeigeschnittstelle des Anwendungsprogramms; und
Fortsetzen (104) des Ausführens des Anwendungsprogramms auf dem Vordergrund und Anzeigen eines mit dem Kommunikationsereignis assoziierten Inhalts in dem Fall, dass eine Inhaltsanzeigeoperationseingabe für das Aufforderungssymbol empfangen wird;
wobei das Erfassen (101), in dem Fall, dass das Kommunikationsereignis empfangen wird, der zugehörigen Informationen des Kommunikationsereignisses, während des Prozesses des Ausführens des Anwendungsprogramms auf dem Vordergrund des mobilen Endgeräts die folgenden Schritte umfasst:
Erfassen (301), in dem Fall, dass das Kommunikationsereignis empfangen wird, der Menge der in dem Kommunikationsereignis zu verarbeitenden Ereignisse und der Typen der zu verarbeitenden Ereignisse, während des Prozesses des Ausführens des Anwendungsprogramms auf dem Vordergrund des mobilen Endgeräts;
Bestimmen (302) der Menge der in dem Kommunikationsereignis zu verarbeitenden Ereignisse und der Typen der zu verarbeitenden Ereignisse als die zugehörigen Informationen.

2. Anzeigeverfahren nach Anspruch 1, wobei das Anzeigeverfahren vor dem Fortsetzen (104) des Ausführens des Anwendungsprogramms auf dem Vordergrund und dem Anzeigen des mit dem Kommunikationsereignis assoziierten Inhalts in dem Fall, dass die Inhaltsanzeigeoperationseingabe für das Aufforderungssymbol empfangen wird, ferner die folgenden Schritte umfasst:
Empfangen einer Berührungsoperationseingabe durch einen Benutzer;
Bestimmen, ob die Berührungsoperation die Inhaltsanzeigeoperationseingabe für das Aufforderungssymbol ist; und
in dem Fall, dass die Berührungsoperation die Inhaltsanzeigeoperationseingabe für das Aufforderungssymbol ist, Bestimmen, dass die Inhaltsanzeigeoperationseingabe für das Aufforderungssymbol empfangen wird.

3. Anzeigeverfahren nach Anspruch 1, wobei das Fortsetzen (104) des Ausführens des Anwendungsprogramms auf dem Vordergrund und des Anzeigens des mit dem Kommunikationsereignis assoziierten Inhalts in dem Fall, dass in dem Fall, dass die Inhaltsanzeigeoperationseingabe für das Aufforderungssymbol empfangen wird, die folgenden Schritte umfasst:
in dem Fall, dass die Inhaltsanzeigeoperationseingabe für das Aufforderungssymbol empfangen wird, Bestimmen einer Anzeigeposition, die der Inhaltsanzeigeoperation entspricht, gemäß einer voreingestellten Entsprechung zwischen einer Benutzereingabeoperation und einer Anzeigeposition; und
Fortsetzen des Ausführens des Anwendungsprogramms auf dem Vordergrund und des Anzeigens des mit dem Kommunikationsereignis assoziierten Inhalts an der Anzeigeposition, die der Inhaltsanzeigeoperation entspricht.

4. Anzeigeverfahren nach Anspruch 1, wobei das Kommunikationsereignis eine eingehende Anrufanforderung oder eine Audio-/Videoanrufanforderung ist und das Anzeigen des mit dem Kommunikationsereignis assoziierten Inhalts den folgenden Schritt umfasst:
Anzeigen mindestens einer Operationstaste, die der eingehenden Anrufanforderung oder der Audio-/Video-Anrufanforderung entspricht;
das Anzeigeverfahren ferner den folgenden Schritt umfasst:
Verarbeiten der eingehenden Anrufanforderung oder der Audio-/Video-Anrufanforderung, die der Ziel-Operationstaste entspricht, in dem Fall, dass eine Klick-Operation auf einer Ziel-Operationstaste empfangen wird, oder in dem Fall, dass eine voreingestellte Berührungsoperation, die mit der Ziel-Operationstaste assoziiert ist, empfangen wird, wobei die Ziel-Operationstaste eine der mindestens einen Operationstaste ist.

5. Anzeigeverfahren nach Anspruch 4, wobei die Ziel-Operationstaste eine Antworttaste ist und das Verarbeiten der eingehenden Anrufanforderung oder der Audio-/Video-Anrufanforderung, die der Zielbedientaste entspricht, die folgenden Schritte umfasst:
Beantworten der eingehenden Anrufanforderung oder der Audio-/Video-Anrufanforderung;
Fortsetzen des Ausführens des Anwendungsprogramms auf dem Vordergrund und Anzeigen einer Anrufschnittstelle der eingehenden Anrufanforderung oder der Audio-/Video-Anrufanforderung.

6. Anzeigeverfahren nach Anspruch 5, wobei die Ziel-Operationstaste eine Antworttaste ist und das Verarbeiten der eingehenden Anrufanforderung oder der Audio-/Video-Anrufanforderung, die der Ziel-Operationstaste entspricht, ferner die folgenden Schritte umfasst:
Erfassen, ob ein Anzeigezustand des mobilen Endgeräts in einem Ziel-Querformat-Anzeigezustand ist;
in dem Fall, dass der Anzeigezustand des mobilen Endgeräts nicht in dem Ziel-Querformat-Anzeigezustand ist, Anzeigen von Haltungsanpassungsaufforderungsinformationen, um einen Benutzer aufzufordern, den Anzeigezustand des mobilen Endgeräts auf den Ziel-Querformat-Anzeigezustand einzustellen.

7. Mobiles Endgerät (700) mit:
einem Informationserfassungsmodul (701), das so konfiguriert ist, dass es in dem Fall, dass ein Kommunikationsereignis empfangen wird, zugehörige Informationen des Kommunikationsereignisses während eines Prozesses des Ausführens eines Anwendungsprogramms auf dem Vordergrund des mobilen Endgeräts erfasst;
**dadurch gekennzeichnet, dass** das mobile Endgerät (700) ferner Folgendes aufweist:
ein Anzeigepositions-Bestimmungsmodul (702), das so konfiguriert ist, dass es eine Ziel-Anzeigeposition, die dem Kommunikationsereignis entspricht, basierend auf den zugehörigen Informationen des Kommunikationsereignisses bestimmt;
ein Aufforderungsmodul (703), das so konfiguriert ist, dass es ein Aufforderungssymbol, das dem Kommunikationsereignis entspricht, an der Ziel-Anzeigeposition in einer Anzeigeschnittstelle des Anwendungsprogramms anzeigt; und
ein Anzeigemodul (704), das so konfiguriert ist, dass es mit dem Ausführen des Anwendungsprogramms auf dem Vordergrund fortsetzt und einen mit dem Kommunikationsereignis assoziierten Inhalt anzeigt, in dem Fall, dass eine Inhaltsanzeigeoperationseingabe für das Aufforderungssymbol empfangen wird;
wobei das Informationserfassungsmodul (701) Folgendes aufweist:
eine Informationserfassungseinheit (7011), die so konfiguriert ist, dass sie in dem Fall, dass das Kommunikationsereignis empfangen wird, die Menge der in dem Kommunikationsereignis zu verarbeitenden Ereignisse und die Typen der zu verarbeitenden Ereignisse während des Prozesses des Ausführens des Anwendungsprogramms auf dem Vordergrund des mobilen Endgeräts erfasst;
eine Informations-Bestimmungseinheit (7012), die so konfiguriert ist, dass sie die Menge der in dem Kommunikationsereignis zu verarbeitenden Ereignisse und die Typen der zu verarbeitenden Ereignisse als die zugehörigen Informationen bestimmt.

8. Mobiles Endgerät (700) nach Anspruch 7, das ferner Folgendes aufweist:
ein Berührungsoperations-Empfangsmodul (705), das so konfiguriert ist, dass es eine Berührungsoperationseingabe durch einen Benutzer empfängt;
ein Bestimmungsmodul (706), das so konfiguriert ist, dass es bestimmt, ob die Berührungsoperation die Inhaltsanzeigeoperationseingabe für das Aufforderungssymbol ist; und
ein Operations-Bestimmungsmodul (707), das so konfiguriert ist, dass es in dem Fall, dass die Berührungsoperation die Inhaltsanzeigeoperationseingabe für das Aufforderungssymbol ist, bestimmt, dass die Inhaltsanzeigeoperationseingabe für das Aufforderungssymbol empfangen wird.

9. Mobiles Endgerät (700) nach Anspruch 7, wobei das Anzeigemodul Folgendes aufweist:
eine Anzeigepositions-Bestimmungseinheit (702), die konfiguriert ist, dass sie in dem Fall, dass die Inhaltsanzeigeoperationseingabe für das Aufforderungssymbol empfangen wird, eine Anzeigeposition, die der Inhaltsanzeigeoperation entspricht, gemäß einer voreingestellten Entsprechung zwischen einer Benutzereingabeoperation und einer Anzeigeposition bestimmt; und
eine Anzeigeeinheit (704), die konfiguriert ist, dass sie mit dem Ausführen des Anwendungsprogramms auf dem Vordergrund fortsetzt und den mit dem Kommunikationsereignis assoziierten Inhalt an der Anzeigeposition, die der Inhaltsanzeigeoperation entspricht, anzeigt.

10. Mobiles Endgerät (700) nach Anspruch 7, wobei das Kommunikationsereignis eine eingehende Anrufanforderung oder eine Audio-/Video-Anrufanforderung ist und das Anzeigemodul (704) ferner so konfiguriert ist, dass es mindestens eine Operationstaste anzeigt, die der eingehenden Anrufanforderung oder der Audio-/Video-Anrufanforderung entspricht; wobei das mobile Endgerät ferner Folgendes aufweist:
ein Verarbeitungsmodul (708), das so konfiguriert ist, dass es in dem Fall, dass eine Klick-Operation auf einer Ziel-Operationstaste empfangen wird, oder in dem Fall, dass eine voreingestellte Berührungsoperation, die der Ziel-Operationstaste der Ziel-Operationstaste assoziiert ist, empfangen wird, die eingehende Anrufanforderung oder die Audio-/Video-Anrufanforderung verarbeitet, die der Ziel-Operationstaste entspricht, wobei die Ziel-Operationstaste eine der mindestens einen Operationstaste ist.

11. Mobiles Endgerät (700) nach Anspruch 10, wobei die Ziel-Operationstaste eine Antworttaste ist und das Verarbeitungsmodul (708) Folgendes aufweist:
eine Antworteinheit (7081), die so konfiguriert ist, dass sie die eingehende Anrufanforderung oder die Audio-/Video-Anrufanforderung beantwortet;
eine Anrufschnittstellen-Anzeigeeinheit, die so konfiguriert ist, dass sie mit dem Ausführen des Anwendungsprogramms auf dem Vordergrund fortsetzt und eine Anrufschnittstelle der eingehenden Anrufanforderung oder der Audio-/Video-Anrufanforderung anzeigt.

12. Mobiles Endgerät (700) nach Anspruch 11, wobei das Verarbeitungsmodul ferner Folgendes aufweist:
eine Anzeigezustands-Erfassungseinheit (7083), die so konfiguriert ist, dass sie erfasst, ob ein Anzeigezustand des mobilen Endgeräts in einem Ziel-Querformat-Anzeigezustand ist;
eine Haltungsanpassungsaufforderungseinheit (7084), die so konfiguriert ist, dass sie in dem Fall, dass der Anzeigezustand des mobilen Endgeräts nicht in dem Ziel-Querformat-Anzeigezustand ist, Haltungsanpassungsaufforderungsinformationen anzeigt, um einen Benutzer aufzufordern, den Anzeigezustand des mobilen Endgeräts an den Ziel-Querformat-Anzeigezustand einzustellen.

13. Computerlesbares Speichermedium, das ein Computerprogramm speichert, **dadurch gekennzeichnet, dass**, wenn das Computerprogramm durch einen Prozessor ausgeführt wird, die Schritte des Anzeigeverfahrens nach einem der Ansprüche 1 bis 6 implementiert werden.

## Revendications

1. Procédé d'affichage, appliqué à un terminal mobile, comprenant :
l'acquisition (101), dans le cas dans lequel un événement de communication est reçu, d'informations associées de l'événement de communication, pendant un processus d'exécution d'un programme d'application au premier plan du terminal mobile ;
**caractérisé en ce que** le procédé d'affichage comprend en outre :
la détermination (102) d'une position d'affichage cible correspondant à l'événement de communication, sur la base des informations associées de l'événement de communication ;
l'affichage (103) d'une icône d'invite correspondant à l'événement de communication à la position d'affichage cible dans une interface d'affichage du programme d'application ; et
la poursuite (104) de l'exécution du programme d'application au premier plan et l'affichage d'un contenu associé à l'événement de communication, dans le cas dans lequel une entrée d'opération d'affichage de contenu pour l'icône d'invite est reçue ;
dans lequel l'acquisition (101), dans le cas dans lequel l'événement de communication est reçu, des informations associées de l'événement de communication, pendant le processus d'exécution du programme d'application au premier plan du terminal mobile comprend :
l'acquisition (301), dans le cas dans lequel l'événement de communication est reçu, de la quantité d'événements à traiter dans l'événement de communication et de types des événements à traiter, pendant le processus d'exécution du programme d'application au premier plan du terminal mobile ;
la détermination (302) de la quantité des événements à traiter dans l'événement de communication et des types des événements à traiter comme étant les informations associées.

2. Procédé selon la revendication 1, dans lequel, avant la poursuite (104) de l'exécution du programme d'application au premier plan et l'affichage du contenu associé à l'événement de communication, dans le cas dans lequel l'entrée d'opération d'affichage de contenu pour l'icône d'invite est reçue, le procédé comprend en outre :
la réception d'une entrée d'opération tactile par un utilisateur ;
la détermination pour savoir si l'opération tactile est l'entrée d'opération d'affichage de contenu pour l'icône d'invite ; et
dans le cas dans lequel l'opération tactile est l'entrée d'opération d'affichage de contenu pour l'icône d'invite, la détermination que l'entrée d'opération d'affichage de contenu pour l'icône d'invite est reçue.

3. Procédé selon la revendication 1, dans lequel la poursuite (104) de l'exécution du programme d'application au premier plan et l'affichage du contenu associé à l'événement de communication, dans le cas dans lequel l'entrée d'opération d'affichage de contenu pour l'icône d'invite est reçue, comprennent :
dans le cas dans lequel l'entrée d'opération d'affichage de contenu pour l'icône d'invite est reçue, la détermination, selon une correspondance prédéfinie entre une opération d'entrée utilisateur et une position d'affichage, d'une position d'affichage correspondant à l'opération d'affichage de contenu ; et
la poursuite de l'exécution du programme d'application au premier plan et l'affichage du contenu associé à l'événement de communication à la position d'affichage correspondant à l'opération d'affichage du contenu.

4. Procédé selon la revendication 1, dans lequel l'événement de communication est une demande d'appel entrant ou une demande d'appel audio/vidéo et l'affichage du contenu associé à l'événement de communication comprend :
l'affichage d'au moins un bouton d'opération correspondant à la demande d'appel entrant ou à la demande d'appel audio/vidéo ;
le procédé comprend en outre :
dans le cas dans lequel une opération de clic sur un bouton d'opération cible est reçue, ou dans le cas dans lequel une opération tactile prédéfinie associée au bouton d'opération cible est reçue, le traitement de la demande d'appel entrant ou de la demande d'appel audio/vidéo correspondant au bouton d'opération cible, dans lequel le bouton d'opération cible est un du au moins un bouton d'opération.

5. Procédé selon la revendication 4, dans lequel le bouton d'opération cible est un bouton de réponse et le traitement de la demande d'appel entrant ou de la demande d'appel audio/vidéo correspondant au bouton d'opération cible comprend :
la réponse à la demande d'appel entrant ou à la demande d'appel audio/vidéo ;
la poursuite de l'exécution du programme d'application au premier plan et l'affichage d'une interface d'appel de la demande d'appel entrant ou de la demande d'appel audio/vidéo.

6. Procédé selon la revendication 5, dans lequel le bouton d'opération cible est un bouton de réponse et le traitement de la demande d'appel entrant ou de la demande d'appel audio/vidéo correspondant au bouton d'opération cible comprend en outre :
la détection si un état d'affichage du terminal mobile est, ou non, dans un état d'affichage paysage cible ;
dans le cas dans lequel l'état d'affichage du terminal mobile n'est pas dans l'état d'affichage paysage cible, l'affichage d'informations d'invite d'ajustement de posture pour inviter un utilisateur à ajuster l'état d'affichage du terminal mobile à l'état d'affichage paysage cible.

7. Terminal mobile (700), comprenant :
un module d'acquisition d'informations (701), configuré pour acquérir, dans le cas dans lequel un événement de communication est reçu, des informations associées de l'événement de communication, pendant un processus d'exécution d'un programme d'application au premier plan du terminal mobile ;
**caractérisé en ce que** le terminal mobile (700) comprend en outre :
un module de détermination de position d'affichage (702), configuré pour déterminer une position d'affichage cible correspondant à l'événement de communication, sur la base des informations associées de l'événement de communication ;
un module d'invite (703), configuré pour afficher une icône d'invite correspondant à l'événement de communication à la position d'affichage cible dans une interface d'affichage du programme d'application ; et
un module d'affichage (704), configuré pour poursuivre l'exécution du programme d'application au premier plan et afficher un contenu associé à l'événement de communication, dans le cas dans lequel une entrée d'opération d'affichage de contenu pour l'icône d'invite est reçue ;
dans lequel le module d'acquisition d'informations (701) comprend :
une unité d'acquisition d'informations (7011), configurée pour acquérir, dans le cas dans lequel l'événement de communication est reçu, la quantité d'événements à traiter dans l'événement de communication et des types des événements à traiter, pendant le processus d'exécution du programme d'application au premier plan du terminal mobile ;
une unité de détermination d'informations (7012), configurée pour déterminer la quantité des événements à traiter dans l'événement de communication et les types des événements à traiter comme étant les informations associées.

8. Terminal mobile (700) selon la revendication 7, comprenant en outre :
un module de réception d'opération tactile (705), configuré pour recevoir une entrée d'opération tactile par un utilisateur ;
un module de détermination (706), configuré pour déterminer si l'opération tactile est, ou non, l'entrée d'opération d'affichage de contenu pour l'icône d'invite ; et
un module de détermination d'opération (707), configuré pour déterminer, dans le cas dans lequel l'opération tactile est l'entrée d'opération d'affichage de contenu pour l'icône d'invite, que l'entrée d'opération d'affichage de contenu pour l'icône d'invite est reçue.

9. Terminal mobile (700) selon la revendication 7, dans lequel le module d'affichage comprend :
une unité de détermination de position d'affichage (702), configurée pour déterminer, dans le cas dans lequel l'entrée d'opération d'affichage de contenu pour l'icône d'invite est reçue, une position d'affichage correspondant à l'opération d'affichage de contenu selon une correspondance prédéfinie entre une opération d'entrée utilisateur et une position d'affichage ; et
une unité d'affichage (704), configurée pour poursuivre l'exécution du programme d'application au premier plan et afficher le contenu associé à l'événement de communication à la position d'affichage correspondant à l'opération d'affichage de contenu.

10. Terminal mobile (700) selon la revendication 7, dans lequel l'événement de communication est une demande d'appel entrant ou une demande d'appel audio/vidéo, et le module d'affichage (704) est en outre configuré pour afficher au moins un bouton d'opération correspondant à la demande d'appel entrant ou à la demande d'appel audio/vidéo ; le terminal mobile comprend en outre :
un module de traitement (708), configuré pour traiter, dans le cas dans lequel une opération de clic sur un bouton d'opération cible est reçue, ou dans le cas dans lequel une opération tactile prédéfinie associée au bouton d'opération cible est reçue, la demande d'appel entrant ou la demande d'appel audio/vidéo correspondant au bouton d'opération cible, dans lequel le bouton d'opération cible est un du au moins un bouton d'opération.

11. Terminal mobile (700) selon la revendication 10, dans lequel le bouton d'opération cible est un bouton de réponse et le module de traitement (708) comprend :
une unité de réponse (7081), configurée pour répondre à la demande d'appel entrant ou à la demande d'appel audio/vidéo ;
une unité d'affichage d'interface d'appel, configurée pour poursuivre l'exécution du programme d'application au premier plan et afficher une interface d'appel de la demande d'appel entrant ou de la demande d'appel audio/vidéo.

12. Terminal mobile (700) selon la revendication 11, dans lequel le module de traitement comprend en outre :
une unité de détection d'état d'affichage (7083), configurée pour détecter si un état d'affichage du terminal mobile est, ou non, dans un état d'affichage paysage cible ;
une unité d'invite d'ajustement de posture (7084), configurée pour afficher, dans le cas dans lequel l'état d'affichage du terminal mobile n'est pas dans l'état d'affichage paysage cible, des informations d'invite d'ajustement de posture pour inviter un utilisateur à ajuster l'état d'affichage du terminal mobile à l'état d'affichage paysage cible.

13. Support de stockage lisible par ordinateur stockant un programme informatique, **caractérisé en ce que**, lorsque le programme informatique est exécuté par un processeur, les étapes du procédé d'affichage selon l'une quelconque des revendications 1 à 6 sont mises en œuvre.
